# EUROPEAN PATENT APPLICATION

(11) **EP 4 276 741 A1**
(43) Date of publication of application: **15.11.2023**
(21) Application number: 21917685.6
(22) Date of filing: 22.12.2021
(51) Int. Cl.: G06T 7/00, G06N 3/04, G06F 16/90

(54) **ANALYSIS DEVICE, ANALYSIS SYSTEM, ANALYSIS PROGRAM, AND ANALYSIS METHOD**

(30) Priority: 08.01.2021 JP 2021002033
(71) Applicant: KONICA MINOLTA, INC., Tokyo 100-7015 (JP)
(72) Inventor: OKAZAKI, Tomoya, Tokyo 100-7015 (JP)
(74) Representative: Gille Hrabal Partnerschaftsgesellschaft mbB Patentanwälte
(86) International application number: PCT/JP2021/047499
(87) International publication number: WO 2022/149465

(57) **Abstract**

Provided is an analysis apparatus that can improve detection accuracy and versatility while suppressing an amount of training data in, for example, identifying a cause of a defect in a product using machine learning.

An analysis apparatus includes: an acquisition section that acquires input data; an identification section that identifies any one of predetermined recognition classes by inputting the input data to a machine learning model trained in advance with training data; a database that stores a correspondence relationship between the recognition class and predetermined information; an analysis section that analyzes the correspondence relationship between the recognition class and the predetermined information by using the database; and an output section that outputs an analysis result.

## Description

### Technical Field

The present invention relates to an analysis apparatus, an analysis system, an analysis program, and an analysis method.

### Background Art

In industrial product production sites and the like, a defective product is sorted by detecting a defect in a product through visual inspection or the like.

In addition, development of a technology for identifying, based on information on the defect detected by visual inspection or the like, an apparatus or the like that has caused the defect so as to be able to cope with the identified apparatus or the like is underway.

Patent Literature 1 discloses the following technologies. In a manufacturing line of a semiconductor device, a defect in a circuit pattern on a wafer is inspected by a visual inspection apparatus, and an apparatus type as a cause of the defect is identified from an inspection result by using a defect mode database indicating a correspondence relationship between a defect mode or the like and the apparatus type. Then, the apparatus causing the defect is identified from the identified apparatus type and the processing history.

### Citation List

### Patent Literature

Patent Literature 1: JP 2005-197437 A

### Summary of Invention

### Technical Problem

However, in the above-described inspection, in a case where an erroneous identification is made in defect inspection, there is a problem that a wrong apparatus is identified by using the database. In a case where an attempt is made to identify an apparatus type or the like as a cause of a defect in End-to-End by machine learning by using a captured image or the like of an inspection target such as an industrial product, there is a problem that inspection accuracy decreases due to lack of training data for machine learning in a case where the type of the inspection target is expanded. The above-described conventional art cannot cope with such problems.

The present invention has been made to solve the above-mentioned problems. That is, an object of the present invention is to provide an analysis system, an analysis program, an analysis apparatus, and an analysis method that can improve detection accuracy and versatility while suppressing an amount of training data in, for example, identifying a cause of a defect in a product using machine learning.

### Solution to Problem

The above-described object of the present invention is achieved by the following means.
(1) An analysis apparatus including: an acquisition section that acquires input data; an identification section that identifies any one of predetermined recognition classes by inputting the acquired input data to a machine learning model trained in advance with training data; a database that stores a correspondence relationship between the recognition class and predetermined information; an analysis section that analyzes the correspondence relationship between the recognition class and the predetermined information by using the database; and an output section that outputs an analysis result obtained by the analysis section.
(2) The analysis apparatus according to (1), wherein the input data is an image, the database stores a correspondence relationship between the recognition class of the defect and the detection result of an apparatus type or a manufacturing process, and the analysis section analyzes the correspondence relationship between the recognition class and the apparatus type or the manufacturing process by using the database.
(3) The analysis apparatus according to (1), wherein the input data is an image, the database stores a correspondence relationship between the recognition class of a behavior and a monitoring place, and the analysis section analyzes the correspondence relationship between the recognition class of the behavior and the monitoring place by using the database.
(4) The analysis apparatus according to (1), wherein the input data is an image, the database stores a correspondence relationship between the recognition class of a behavior and applicability to a detection target behavior, and the analysis section analyzes the correspondence relationship between the recognition class and the applicability to the detection target behavior by using the database.
(5) The analysis apparatus according to (1), wherein the machine learning model is a neural network, and the identification section inputs the input data to the neural network and converts the input data into any one of the recognition classes and a certainty factor of the recognition class.
(6) The analysis apparatus according to (1), wherein the input data is an image, and the analysis apparatus further includes a data control section that switches the database used for analysis by the analysis section or limits the database to a part of the database in accordance with information on a product included in the image or information on a place where a person included in the image is present.
(7) The analysis apparatus according to (5), wherein the analysis section does not perform analysis when the certainty factor of the recognition class converted by the identification section is less than a predetermined threshold value.
(8) The analysis apparatus according to (5), wherein the analysis section weights the certainty factor in accordance with a degree of importance set for each of the recognition classes converted by the identification section, and analyzes, using the database, a correspondence relationship between the recognition class having a highest weighted certainty factor and the predetermined information.
(9) The analysis apparatus according to (2), wherein the analysis section accumulates identification results by the identification section of respective images of different analysis targets of a same product, and detects the apparatus type through analysis based on a plurality of accumulated identification results.
(10) An analysis system including: the analysis apparatus according to any one of (1) to (9); and a storage section that stores the machine learning model and the database.
(11) An analysis program for causing a computer to execute a process including the procedures of: (a) acquiring input data detected; (b) inputting the input data acquired in the procedure (a) to a machine learning model trained in advance with training data to identify any one of predetermined recognition classes; (c) analyzing a correspondence relationship between the recognition class and predetermined information by using a database storing the correspondence relationship between the recognition class and the predetermined information; and (d) outputting an analysis result obtained in the procedure (c).
(12) The analysis program according to (11), wherein the input data is an image, the database stores a correspondence relationship between the recognition class of a defect and an apparatus type or a manufacturing process, and the procedure (c) includes analyzing the correspondence relationship between the recognition class and the apparatus type or the manufacturing process by using the database.
(13) The analysis program according to (11), wherein the input data is an image, the database stores a correspondence relationship between the recognition class of a behavior and a monitoring place, and the procedure (c) includes analyzing the correspondence relationship between the recognition class of the behavior and the monitoring place by using the database.
(14) The analysis program according to (11), wherein the input data is an image, the database stores a correspondence relationship between the recognition class of a behavior and applicability to a detection target behavior, and the procedure (c) includes analyzing the correspondence relationship between the recognition class and the applicability to the detection target behavior by using the database.
(15) The analysis program according to claim (11), wherein the machine learning model is a neural network, and the procedure (b) includes inputting the input data to the neural network, and converting the input data into any one of the recognition classes and a certainty factor of the recognition class.
(16) The analysis program according to (11), wherein the input data is an image, and the process further includes a procedure (d) of switching the database used for analysis in the procedure (c) or limiting the database to a part of the database in accordance with information on a product included in the image or information on a place where a person included in the image is present.
(17) The analysis program according to (15), wherein the procedure (c) includes not performing analysis when the certainty factor of the recognition class converted in the procedure (b) is less than a predetermined threshold value.
(18) The analysis program according to (15), wherein the procedure (c) includes weighting the certainty factor in accordance with a degree of importance set for each of the recognition classes converted in the procedure (b), and analyzing a correspondence relationship between the recognition class having a highest weighted certainty factor and the predetermined information by using the database.
(19) The analysis program according to (12), wherein the procedure (c) includes accumulating identification results in the procedure (b) of respective images of different analysis targets of a same product, and detecting the apparatus type through analysis based on a plurality of accumulated identification results.
(20) An analysis method including the steps of: (a) acquiring input data detected; (b) inputting the input data acquired in the step (a) to a machine learning model trained in advance with training data to identify any one of predetermined recognition classes; (c) analyzing a correspondence relationship between the recognition class and predetermined information by using a database storing the correspondence relationship between the recognition class and the predetermined information; and (d) outputting an analysis result obtained in the step (c). Advantageous Effects of Invention

Any one of predetermined recognition classes is identified from input data using a trained machine learning model, and a correspondence relationship between the recognition class and predetermined information is analyzed using a database that stores the correspondence relationship between the recognition class and the predetermined information. Thus, in, for example, identifying a cause of a defect in a product using machine learning, it is possible to improve detection accuracy and versatility while suppressing an amount of training data.

### Brief Description of Drawings

Fig. 1 is a diagram illustrating a configuration of an analysis system.
Fig. 2 is a block diagram of an analysis apparatus included in the analysis system.
Fig. 3 is a functional block diagram of a controller.
Fig. 4 is a flowchart illustrating an operation of the analysis system.
Fig. 5 is a functional block diagram of the controller.
Fig. 6 is a flowchart illustrating an operation of the analysis system.
Fig. 7 is a functional block diagram of the controller.
Fig. 8 is a flowchart illustrating an operation of the analysis system.
Fig. 9 is a functional block diagram of the controller.
Fig. 10 is a flowchart illustrating an operation of the analysis system.

### Description of Embodiments

Hereinafter, with reference to the drawings, an analysis apparatus, an analysis system, an analysis program, and an analysis method according to embodiments of the present invention will be described. Note that in the drawings, the same constituent elements are denoted by the same reference numerals, and redundant description thereof will be omitted. In addition, dimensional ratios in the drawings are exaggerated for convenience of description and may be different from actual ratios.

### (First embodiment)

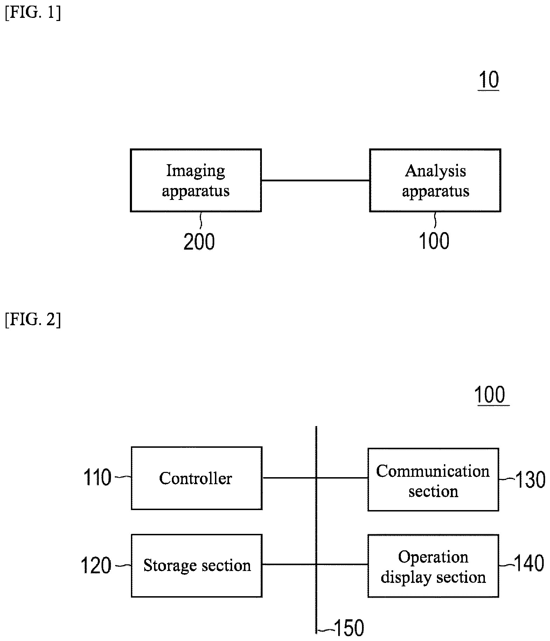

Fig. 1 is a diagram illustrating a configuration of an analysis system 10. Fig. 2 is a block diagram of an analysis apparatus 100 included in the analysis system 10. The analysis apparatus 100 may be configured by a plurality of apparatuses.

The analysis system 10 may include the analysis apparatus 100 and an imaging apparatus 200.

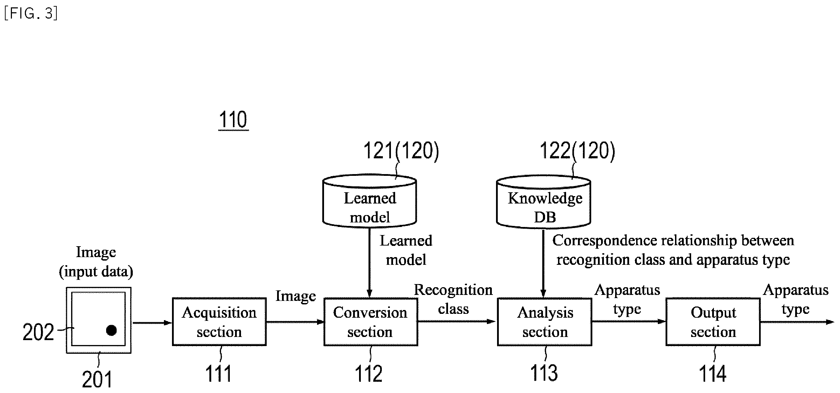

The imaging apparatus 200 captures an image 201 of an analysis target 202 (see Fig. 3) (hereinafter, also simply referred to as the "image 201"). The image 201 constitutes input data to be input to the analysis apparatus 100. The image 201 may be an image of all or a part of the analysis target 202. The image 201 may be an image including an object other than the analysis target 202. The imaging apparatus 200 includes, for example, a camera. The analysis target 202 is, for example, a product, and the product includes not only a finished product such as an automobile or a semiconductor chip but also components such as an automobile body, a bolt, a nut, and a flat plate. The imaging apparatus 200 can be replaced with a scanner, a microphone, a voice recognition apparatus that converts voice into text data, an odor sensor, a temperature sensor, and the like. Data detected (acquired) by these apparatuses also constitutes input data.

The image 201 may be, for example, a monochrome image or a color image, and may be a 128 pixel x 128 pixel image. The imaging apparatus 200 transmits the image 201 to the analysis apparatus 100.

The analysis apparatus 100 detects an abnormality of the analysis target by analyzing the image. The abnormality includes, for example, a flaw, a chip, a fold, a bend, dirt, discoloration (a change in color), an abnormal temperature, and a malodor. As will be described later, the analysis apparatus 100 can detect an abnormality (defect) of the analysis target as any one of predetermined recognition classes indicating types of abnormality.

Note that in a third embodiment described later, the analysis target 202 may be a person. In this case, the abnormality includes, for example, an abnormality of a behavior of a person in a manufacturing line of a product.

The analysis apparatus 100 further performs analysis to detect (identify), from the detected type of abnormality (recognition class of defect), a type of an apparatus that has caused the abnormality, and outputs an analysis result.

As illustrated in Fig. 2, the analysis apparatus 100 includes a controller 110, a storage section 120, a communication section 130, and an operation display section 140. These constituent elements are connected to each other via a bus 150. The analysis apparatus 100 is constituted of, for example, a computer terminal.

The controller 110 includes a central processing unit (CPU), and a memory such as a random access memory (RAM) and a read only memory (ROM).

The controller 110 performs control and arithmetic processing of the respective sections of the analysis apparatus 100 in accordance with a program. Details of functions of the controller 110 will be given later.

The storage section 120 includes a hard disc drive (HDD), a solid state drive (SSD), or the like, and stores various programs and various types of data.

The communication section 130 is an interface circuit (e.g., a local-area network (LAN) card) for communicating with an external apparatus through a network.

The operation display section 140 may be constituted of, for example, a touch panel. The operation display section 140 accepts various inputs from a user. The operation display section 140 displays various information including the analysis result of the inspection target.

Functions of the controller 110 will be described below.

Fig. 3 is a functional block diagram of the controller 110. The controller 110 functions as an acquisition section 111, a conversion section 112, an analysis section 113, and an output section 114. Fig. 3 also illustrates a learned model 121 and a knowledge database 122 stored in the storage section 120.

The acquisition section 111 acquires the image 201 by receiving it from the imaging apparatus 200. In a case where the image is stored in the storage section 120, the acquisition section 111 can acquire the image 201 by reading it from the storage section 120.

In Fig. 3, the analysis target 202 is a flat plate that is a component, and an image 201 in which dirt of a black circle is present at the lower right of the flat plate is illustrated.

The conversion section 112 inputs the image 201 to the learned model read out from the storage section 120, and identifies any one of the predetermined recognition classes. The identification includes identification performed through conversion and classification. The conversion section 112 constitutes an identification section. In the following description, for the sake of convenience in the description, it is assumed that the identification is performed through conversion. Specifically, for example, the conversion section 112 converts the image 201 into a vector of the certainty factor of each recognition class (the certainty factor of each recognition class). The certainty factor is a likelihood indicating the probability that the image 201 corresponds to a corresponding recognition class. The predetermined recognition class may be a recognition class of the defect (abnormality). Converting the image 201 into the vector of the certainty factor of each recognition class by the conversion section 112 is to enable identification of a recognition class having a high certainty factor. Converting the image 201 into the vector of the certainty factor of each recognition class by the conversion section 112 is equivalent to converting the image 201 into a predetermined identification class. Note that the conversion section 112 may convert the image 201 into a recognition class having the highest certainty factor instead of the vector of the certainty factor. More specifically, the recognition class having the highest certainty factor is data for identifying the recognition class having the highest certainty factor.

The learned model 121 is an example of a machine learning model trained in advance, and may be a learned model of a neural network. The learned model 121 may be a learned model of a support vector machine or a random forest, which is a model other than the neural network. Hereinafter, for the sake of convenience in the description, description will be given on the assumption that the learned model 121 is a learned model of a neural network.

The learned model 121 is generated in advance by training a neural network using train data of a combination of the image 201 and a ground truth label corresponding to the image 201. The learned model 121 is generated in advance by training a neural network using a relatively large amount of train data. The ground truth label is a recognition class. The train data is training data. The generated learned model 121 can be stored in the storage section 120. Specifically, the neural network is trained so that the difference (loss) between the recognition class when the image 201 is input and the ground truth label becomes small. The neural network is trained by back propagation. Specifically, the recognition class is a vector of the certainty factor of each recognition class. Specifically, the ground truth label is a ground truth of a vector of the certainty factor of each recognition class.

It is preferable that the train data is a combination of the image 201 of the defective product and the ground truth label of the recognition class of the defect. The recognition class of the defect is the recognition class corresponding to the image 201 of the defective product. Thus, it is possible to efficiently improve accuracy in detection of an abnormality (defect) performed by the conversion section 112.

The predetermined recognition classes are types of abnormality. The predetermined recognition classes include, for example, "a flaw having a length equal to or longer than a predetermined length", "a flaw having a length less than a predetermined length", "a flaw having a thickness equal to or greater than a predetermined thickness", and "a flaw having a thickness less than a predetermined thickness". The predetermined recognition classes include, for example, "dirt having an area equal to or larger than a predetermined area", "dirt having an area less than a predetermined area", and "discoloration". In addition, for example, "dirt having an area equal to or larger than a predetermined area", "dirt having an area equal to or smaller than a predetermined area", and the like can be subdivided into a plurality of recognition classes for respective locations of dirt in the image 201. That is, the recognition classes may include, for example, "upper right dirt having an area equal to or larger than a predetermined area" and "lower right dirt having an area equal to or larger than a predetermined area". The recognition classes may include "upper left dirt having an area equal to or larger than a predetermined area" and "lower left dirt having an area equal to or larger than a predetermined area". The recognition classes may include "upper right dirt having an area equal to or smaller than a predetermined area" and "lower right dirt having an area equal to or smaller than a predetermined area". The recognition classes may include "upper left dirt having an area equal to or smaller than a predetermined area", "lower left dirt having an area equal to or smaller than a predetermined area", and the like. The recognition classes may be further subdivided as necessary. The predetermined length, the predetermined thickness, and the predetermined area can be appropriately set through experiments or the like from the viewpoint of analysis accuracy of analysis for detecting an apparatus type from the recognition classes. The recognition classes may include a class (e.g., "non-defective product") other than the types of abnormality. The recognition classes may be recognition classes of a behavior when a person is included in the analysis target.

The analysis section 113 performs analysis to detect the type of the apparatus that has caused the abnormality, using conversion results obtained by the conversion section 112 and the knowledge database 122 stored in the storage section 120. The conversion results obtained by the conversion section 112 are the recognition classes. That is, the analysis section 113 analyzes a correspondence relationship between the recognition classes and the predetermined information (detection results) by using the knowledge database 122. Thus, the type of the apparatus that has caused the abnormality is detected. The apparatus type detected through the analysis performed by the analysis section 113 constitutes predetermined information. The predetermined information may be a manufacturing process, a monitoring place, or the like. The knowledge database 122 may be a data group (or apparatus) that indicates (stores) a correspondence relationship between the recognition classes and predetermined information. It is preferable that the predetermined information is information different from the recognition classes and is not obtained from the machine learning model, but may be information obtained from the machine learning model. The predetermined information may be detection results detected by a detection device or may be input information input to an input device such as the operation display section 140. Specifically, the predetermined information is preferably information on a cause or a place of occurrence of a defect, an abnormality, or the like. It is more preferable that the predetermined information is information on an apparatus type, a manufacturing process, or a monitoring place. Hereinafter, for the sake of convenience in the description, description will be made on the assumption that the predetermined information is an apparatus type, unless otherwise specified. Specifically, for example, in a case where the certainty factor of the recognition class of "lower right dirt having an area equal to or smaller than a predetermined area" is the highest in the conversion results obtained by the conversion section 112, the analysis section 113 identifies the apparatus type corresponding to "lower right dirt having an area equal to or smaller than a predetermined area". Specifically, for example, the analysis section 113 detects the apparatus type corresponding to "lower right dirt having an area equal to or smaller than a predetermined area" by identifying it using the knowledge database.

The correspondence relationship between the recognition classes and the apparatus types included in the knowledge database 122 may be based on, for example, knowledge of a skilled worker or engineer in a production factory. This is because a worker or the like is highly likely to be able to more accurately identify the process (type of apparatus) that has caused the abnormality (defect), for example, simply by looking at an image of a flat plate including a lower right dirt having an area equal to or smaller than a predetermined area, based on his or her experience.

The correspondence relationship between the recognition classes and the apparatus types included in the knowledge database 122 may be set based on a past repair history of the apparatus.

In this way, even the type of abnormality is estimated by machine learning without End-to-End detection of the type of the apparatus that has caused the abnormality from the image 201 by machine learning. Then, using the knowledge database 122, information (such as language information) on the type of apparatus that has caused the abnormality is identified from information (such as language information) on the type of abnormality. Thus, it is possible to improve detection accuracy and versatility while suppressing the amount of training data. Detection of an abnormality based on an image or the like is likely to be affected by an imaging condition (e.g., an imaging environment). Therefore, in a case of End-to-End detection of a type of an apparatus that has caused the abnormality from an image or the like by machine learning, retraining of a learned model is required every time a production factory changes. In the present embodiment, the information in the knowledge database 122 is knowledge of the correspondence relationship between the type of abnormality and the type of the apparatus that has caused the abnormality. For this reason, in the present embodiment, the learned model 121 can be reused in a different production factory, and retraining can be made unnecessary.

The analysis section 113 may detect the type of the apparatus that has caused the abnormality by using a plurality of recognition classes each having a certainty factor equal to or greater than a predetermined threshold value and the knowledge database 122. For example, in a case where the recognition classes each having a certainty factor equal to or greater than a predetermined threshold value are "lower right dirt having an area equal to or smaller than a predetermined area" and "upper left dirt having an area equal to or larger than a predetermined area", the apparatus type corresponding to these two recognition classes is detected. The apparatus type corresponding to these two recognition classes can be detected by being identified using the knowledge database. Therefore, the knowledge database 122 may include data indicating a correspondence relationship between a plurality of recognition classes and one apparatus type. The predetermined threshold value can be appropriately set by an experiment or the like from the viewpoint of the analysis accuracy of the analysis for identifying the apparatus type from the recognition classes.

In a case where the certainty factor of the recognition classes converted from the image 201 is less than a predetermined threshold value, the analysis section 113 may not perform the analysis for detecting the apparatus type. The certainty factor of the recognition class converted from the image 201 is, for example, the highest certainty factor among the certainty factors included in the vectors of the certainty factors of the respective recognition classes.

The degree of importance of the type of abnormality may be set to each recognition class. The analysis section 113 performs weighting by multiplying the certainty factor of the recognition class indicating the type of abnormality by the degree of importance. The analysis section 113 may use, as the analysis result, the apparatus type that corresponds to the recognition class having the highest certainty factor after weighting in the knowledge database 122. The degree of importance can be appropriately set by an experiment or the like from an any viewpoint. For example, the degree of importance can be appropriately set from the viewpoint of the magnitude of the degree of influence of the type of abnormality on the entire manufacturing line.

The analysis section 113 accumulates, in the storage section 120 or the like, the conversion results by the conversion section 112 of the respective images 201 of the different analysis targets 202 of the same product. The analysis section 113 can detect the apparatus type by analysis based on the plurality of accumulated conversion results. Specifically, for example, the analysis section 113 acquires each of the images 201 of a plurality of same components flowing on the manufacturing line. The analysis section 113 converts the plurality of images 201 of the same component into respective recognition classes and accumulates the conversion results. The analysis section 113 calculates the average value of the vectors of the certainty factors of the recognition classes, which are the plurality of accumulated conversion results. The analysis section 113 may detect, using the knowledge database 122, the apparatus type corresponding to the recognition class having the highest average value of the certainty factors.

The output section 114 outputs the analysis result obtained by the analysis section 113. Specifically, the output section 114 outputs the apparatus type detected through the analysis performed by the analysis section 113 by displaying the apparatus type on the operation display section 140. The output section 114 may output the apparatus type detected by the analysis section 113 by transmitting the apparatus type to an external apparatus via the communication section 130.

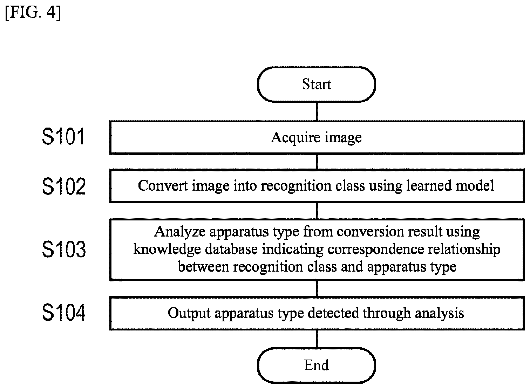

Fig. 4 is a flowchart illustrating an operation of the analysis system 10. This flowchart can be executed by the controller 110 of the analysis apparatus 100 in accordance with a program.

The controller 110 acquires the image 201 by receiving it from the imaging apparatus 200 (S101).

The controller 110 converts the image 201 into a vector of the certainty factor of each recognition class using the learned model 121 (S102).

The controller 110 performs analysis for detecting an apparatus type from the conversion results in step S102 using the knowledge database 122 (S103).

The controller 110 outputs the apparatus type detected through the analysis by, for example, displaying the apparatus type on the operation display section 140 (S104).

### (Second embodiment)

A second embodiment will be described. The present embodiment is different from the first embodiment in the following points. In the present embodiment, the knowledge database 122 used for analysis by the analysis section 113 is switched based on information on a manufacturing process for a product that is the analysis target 202 included in the image 201. Alternatively, in the present embodiment, the knowledge database 122 used for analysis by the analysis section 113 is limited to a part of the knowledge database 122. In other respects, the present embodiment is the same as the first embodiment, and therefore redundant description will be omitted or simplified.

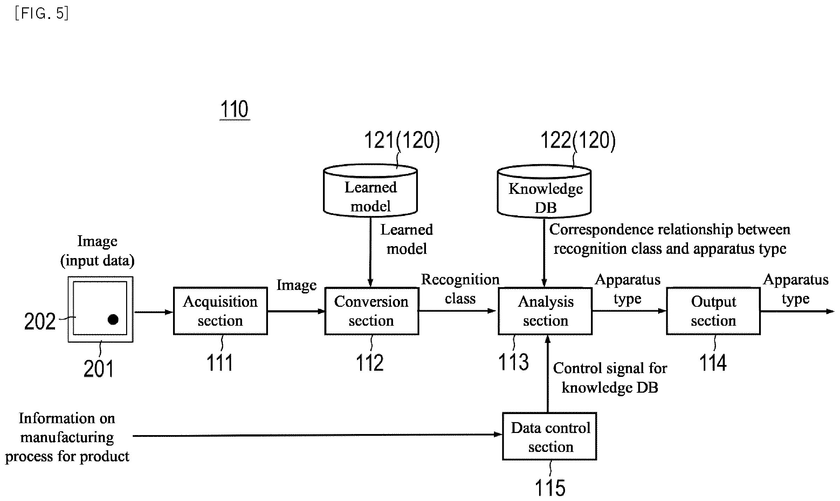

Fig. 5 is a functional block diagram of the controller 110. The controller 110 functions as the acquisition section 111, the conversion section 112, the analysis section 113, the output section 114, and a data control section 115.

The acquisition section 111 acquires the image 201 by, for example, receiving it from the imaging apparatus 200.

The data control section 115 acquires information on the manufacturing process for the product included in the image 201. The information on the manufacturing process for the product is, for example, information indicating a painting process for a flat plate that is a component. The information on the manufacturing process for the product can be registered by being stored in the storage section 120 in advance in association with the imaging apparatus 200 that captures the image 201 of the product in the manufacturing process. For example, the data control section 115 can acquire the information on the manufacturing process for the product associated with the imaging apparatus 200 that is a reception destination of the image 201 by reading the information from the storage section 120.

The data control section 115 generates a control signal for the knowledge database 122 based on the information on the manufacturing process for the product included in the image 201. The control signal for the knowledge database 122 is a signal for the analysis section 113 to perform switching or the like of the knowledge database 122 used for analysis.

The analysis section 113 switches the knowledge database used for analysis by the analysis section 113 to the knowledge database 122 corresponding to the manufacturing process for the product included in the image 201. The analysis section 113 switches the knowledge database used for analysis in accordance with the control signal for the knowledge database 122. For example, when the knowledge database 122 is a comprehensive database corresponding to all analysis-target manufacturing processes in a manufacturing line, the data control section 115 may limit the database used for analysis by the analysis section 113. The data control section 115 may limit the database used for analysis by the analysis section 113 to a part of the knowledge database 122. The analysis target is a product or a component. The data control section 115 may limit the database used for analysis to a part of the knowledge database 122 in accordance with the control signal for the knowledge database 122.

The analysis section 113 performs analysis by using the knowledge database 122 after switching in accordance with the control signal for the knowledge database 122. The analysis section 113 may perform analysis by using only a part of the knowledge database 122 in accordance with the control signal for the knowledge database 122.

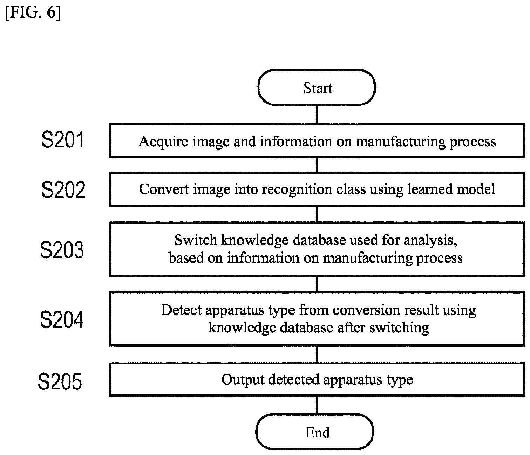

Fig. 6 is a flowchart illustrating an operation of the analysis system 10. This flowchart can be executed by the controller 110 of the analysis apparatus 100 in accordance with a program.

The controller 110 acquires the image 201 and information on a manufacturing process for a product included in the image 201, by receiving them from the imaging apparatus 200 (S201).

The controller 110 converts the image 201 into a vector of the certainty factor of each recognition class using the learned model 121 (S202).

Based on the information on the manufacturing process for the product, the controller 110 switches the knowledge database 122 used for the analysis for detecting the type of the apparatus that has caused the abnormality (S203).

The controller 110 performs analysis for detecting the apparatus type from the conversion results in step S202 by using the knowledge database 122 after the switching (S204).

The controller 110 outputs the apparatus type detected through the analysis by, for example, displaying the apparatus type on the operation display section 140 (S205).

### (Third embodiment)

A third embodiment will be described. The present embodiment is different from the first embodiment in the following points. In the first embodiment, the analysis target is a component or the like. In the first embodiment, the predetermined recognition class into which the image 201 is converted is the type of abnormality. In the first embodiment, the knowledge database 122 indicates the relationship between the type of abnormality and the apparatus type, and the apparatus type is detected through analysis. In the present embodiment, the analysis target 202 is a person. In the present embodiment, the predetermined recognition class into which the image 201 is converted is a person's behavior. In the present embodiment, the knowledge database 122 indicates a relationship between the person's behavior and the applicability to a detection target behavior, and the applicability to the detection target behavior is detected through analysis. The person's behavior and the applicability to the detection target behavior are, for example, relevance or irrelevance of an abnormal behavior. In other respects, the present embodiment is the same as the first embodiment, and therefore redundant description will be omitted or simplified.

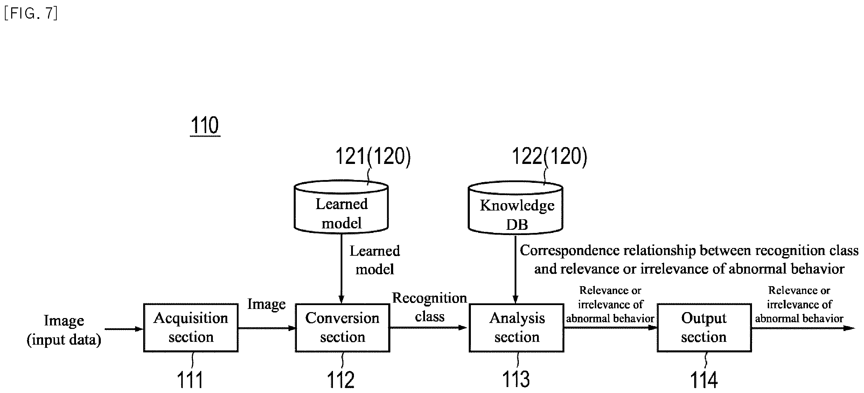

Fig. 7 is a functional block diagram of the controller 110. The controller 110 functions as the acquisition section 111, the conversion section 112, the analysis section 113, and the output section 114.

The acquisition section 111 acquires the image 201 by, for example, receiving it from the imaging apparatus 200. The image 201 includes an image of a person (e.g., a worker on a manufacturing line) as the analysis target 202. The image 201 may include a plurality of persons as the analysis targets 202. The image 201 may include images of apparatuses, floors, chairs, and the like.

The conversion section 112 inputs a plurality of images 201 (e.g., moving images) to the learned model read out from the storage section 120, and converts them into person's behaviors that are predetermined recognition classes. Specifically, the conversion section 112 converts the plurality of images 201 into vectors of the certainty factors of respective recognition classes. The reason why the plurality of images 201 are converted into the predetermined recognition classes is that the recognition class is the person's behavior. For this reason, it is considered that the temporal transition (temporal change) of the normal image 201 is necessary in order to identify the behavior. Note that the conversion section 112 may convert one image 201 into a recognition class. This is because, for example, a behavior of a worker such as hitting another worker can be identified from one image 201.

The learned model 121 may be generated in advance by training a neural network using a relatively large amount of train data and stored in the storage section 120. The train data is a combination of the plurality of images 201 and recognition classes that are ground truth labels corresponding to the plurality of images 201.

The training of the neural network using the train data of the combination of the plurality of images 201 and the recognition classes which are the ground truth labels corresponding to the plurality of images 201, and the conversion of the plurality of images 201 into vectors of the certainty factors of the respective recognition classes using the learned model 121 can use, for example, a long short-term memory (LSTM) which is a well-known technique.

The predetermined recognition classes are person's behaviors, and include, for example, "not moving in a lying position", "not moving in a sitting position", and "hitting another person". It is preferable that the following train data is used in a case where the learned model 121 is generated. As the train data, it is preferable to use a combination of an image 201 of an abnormal behavior such as "not moving in a lying position" or "hitting another person" and a ground truth label of a recognition class of the abnormal behavior. Thus, it is possible to efficiently improve accuracy in detection of the abnormal behavior performed by the conversion section 112. The predetermined recognition classes may include a "normal behavior".

The analysis section 113 uses the conversion results obtained by the conversion section 112 and the knowledge database 122 stored in the storage section 120 to perform analysis for detecting the applicability to the detection target behavior. That is, the analysis section 113 analyzes a correspondence relationship between the recognition classes and the predetermined information (detection results) by using the knowledge database 122. Thus, the applicability to the detection target behavior is detected. The applicability to the detection target behavior detected through the analysis performed by the analysis section 113 constitutes predetermined information. The applicability to the detection target behavior includes relevance or irrelevance of the abnormal behavior (whether it is an abnormal behavior). Hereinafter, for the sake of convenience in the description, description will be given on the assumption that the applicability to the detection target behavior is relevance or irrelevance of the abnormal behavior. The knowledge database 122 may be a data group (or apparatus) that indicates (stores) a correspondence relationship between the recognition classes and predetermined information. The predetermined information includes information on relevance or irrelevance of the abnormal behavior. Specifically, in a case where the certainty factor of the recognition class of "not moving in a lying position" is the highest in the conversion results obtained by the conversion section 112, the analysis section 113 identifies and detects relevance or irrelevance of an abnormal behavior corresponding to "not moving in a lying position". The relevance or irrelevance of the abnormal behavior corresponding to "not moving in a lying position" is whether the behavior corresponding to "not moving in a lying position" is an abnormal behavior. The analysis section 113 detects relevance or irrelevance of the abnormal behavior corresponding to "not moving in a lying position" by identifying it using the knowledge database.

The correspondence relationship between the recognition class and the relevance or irrelevance of the abnormal behavior included in the knowledge database 122 can be set as follows based on, for example, a past care record or a past monitoring record. The correspondence relationship between the recognition class and the relevance or irrelevance of the abnormal behavior can be appropriately set by determining whether it is appropriate to determine that the recognition class corresponds to the abnormal behavior and issue a warning or the like.

The correspondence relationship between the recognition class and the relevance or irrelevance of the abnormal behavior included in the knowledge database 122 can be set in accordance with a place where the image 201 is captured (hereinafter, referred to as an "analysis environment"). For example, in a case where the analysis environment is in each process of the production line, the correspondence relationship between the recognition class of "not moving in a lying position" and the detection result of "relevance of the abnormal behavior" can be set. Furthermore, for example, in a case where the analysis environment is on a bed in a hospital, the correspondence relationship between the recognition class of "not moving in a lying position" and the detection result of "irrelevance of the abnormal behavior (normal)" can be set.

The degree of importance of the type of abnormality may be set to each recognition class. The analysis section 113 performs weighting by multiplying the certainty factor of the recognition class indicating the type of abnormality by the degree of importance. The analysis section 113 may use, as an analysis result, relevance or irrelevance of an abnormal behavior that corresponds to the recognition class having the highest certainty factor after weighting in the knowledge database 122. The degree of importance can be appropriately set by an experiment or the like from an any viewpoint. For example, the degree of importance can be appropriately set from the viewpoint of the urgency of care (response) for a behavior of the recognition class.

The output section 114 outputs the analysis result obtained by the analysis section 113. Specifically, the output section 114 outputs relevance or irrelevance of the abnormal behavior detected through the analysis performed by the analysis section 113 by displaying it on the operation display section 140. The output section 114 may output the relevance or irrelevance of the abnormal behavior detected by the analysis section 113 by transmitting it to an external apparatus via the communication section 130.

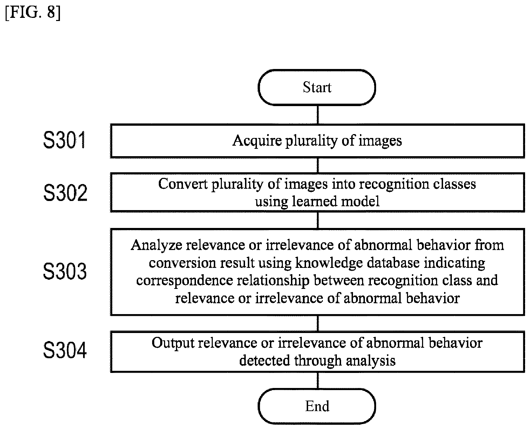

Fig. 8 is a flowchart illustrating an operation of the analysis system 10. This flowchart can be executed by the controller 110 of the analysis apparatus 100 in accordance with a program.

The controller 110 acquires the plurality of images 201 by, for example, receiving them from the imaging apparatus 200 (S301).

The controller 110 converts the plurality of images 201 into vectors of the certainty factors of respective recognition classes using the learned model 121 (S302).

The controller 110 performs analysis for detecting relevance or irrelevance of the abnormal behavior from the conversion results in step S302 by using the knowledge database 122 (S303).

The controller 110 outputs the relevance or irrelevance of the abnormal behavior detected through the analysis by, for example, displaying it on the operation display section 140 (S304).

### (Fourth embodiment)

A fourth embodiment will be described. The present embodiment is different from the third embodiment in the following points. In the present embodiment, the knowledge database 122 used for analysis by the analysis section 113 is switched based on information on the analysis environment included in the image 201. The information on the analysis environment is information on a place where a person who is the analysis target 202 is present. Alternatively, in the present embodiment, the knowledge database 122 used for analysis by the analysis section 113 is limited to a part of the knowledge database 122. In other respects, the present embodiment is the same as the third embodiment, and therefore redundant description will be omitted or simplified.

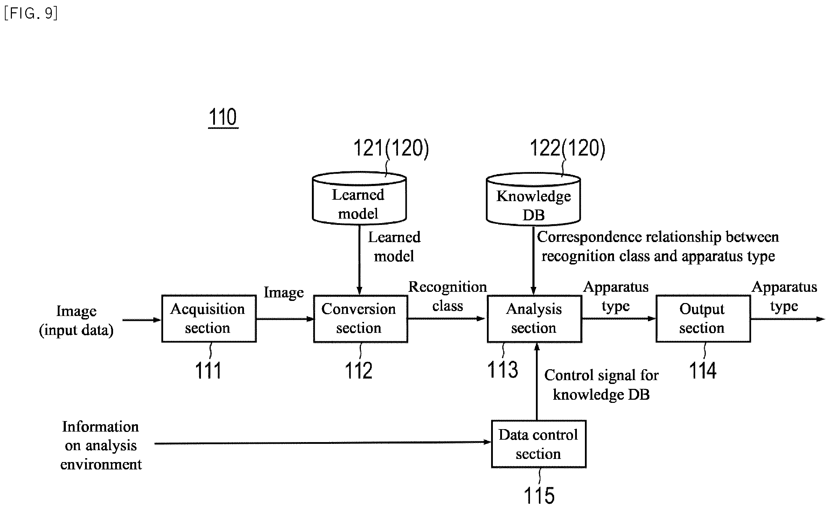

Fig. 9 is a functional block diagram of the controller 110. The controller 110 functions as the acquisition section 111, the conversion section 112, the analysis section 113, the output section 114, and the data control section 115.

The acquisition section 111 acquires the plurality of images 201 by, for example, receiving them from the imaging apparatus 200.

The data control section 115 acquires information on an analysis environment which is information on a place where the image 201 is captured and where the person who is the analysis target 202 is present. The information on the analysis environment may be, for example, a workplace for a painting process for a flat plate in a manufacturing line or place on a bed in a hospital. The information on the analysis environment can be registered by being stored in advance in the storage section 120 in association with the imaging apparatus 200 that captures the image 201. The data control section 115 can acquire the information on the analysis environment associated with the imaging apparatus 200 that is the reception destination of the image 201 by reading the information from the storage section 120.

The data control section 115 generates a control signal for the knowledge database 122 based on the information on the analysis environment. The control signal for the knowledge database 122 is a signal for the analysis section 113 to switch the knowledge database 122 used for analysis.

The analysis section 113 switches the knowledge database used for the analysis by the analysis section 113 in accordance with the control signal for the knowledge database 122. The analysis section 113 switches the knowledge database used for analysis by the analysis section 113 to the knowledge database 122 corresponding to the analysis environment where the image 201 is captured. For example, when the knowledge database 122 is a comprehensive database corresponding to a plurality of analysis environments, the data control section 115 may limit the database used for analysis by the analysis section 113. The data control section 115 may limit the database used for analysis to a part of the knowledge database 122 for use in the analysis environment. The imaging environment is an analysis environment corresponding to the imaging apparatus 200 at the place where the person to be analyzed is imaged. The data control section 115 limits the database used for analysis by the analysis section 113 in accordance with the control signal for the knowledge database 122.

The analysis section 113 performs analysis by using the knowledge database 122 after switching in accordance with the control signal for the knowledge database 122. The analysis section 113 may perform analysis by using only a part of the knowledge database 122 in accordance with the control signal for the knowledge database 122.

The relevance or irrelevance of the abnormal behavior may change depending on the imaging place where the person who is the analysis target 202 is present. However, by switching, in accordance with the analysis environment, the knowledge database 122 indicating the correspondence relationship between the behavior and relevance or irrelevance of the abnormal behavior, various situations of the monitoring target can be handled.

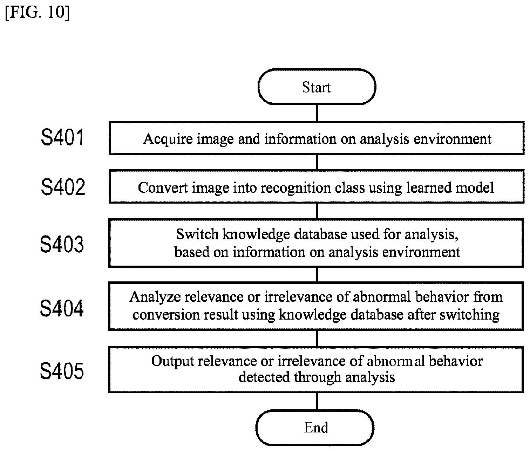

Fig. 10 is a flowchart illustrating an operation of the analysis system 10. This flowchart can be executed by the controller 110 of the analysis apparatus 100 in accordance with a program.

The controller 110 acquires the plurality of images 201 and information on an analysis environment which is a place where the plurality of images 201 are captured (S401).

The controller 110 converts the images 201 into vectors of the certainty factors of respective recognition classes using the learned model 121 (S402).

Based on the information on the analysis environment, the controller 110 switches the knowledge database 122 used for the analysis for detecting the abnormality of relevance or irrelevance of the abnormal behavior (S403).

The controller 110 performs the analysis for detecting the relevance or irrelevance of the abnormal behavior from the conversion results in step S402 by using the knowledge database 122 after the switching (S404).

The controller 110 outputs the relevance or irrelevance of the abnormal behavior detected through the analysis by, for example, displaying it on the operation display section 140 (S405).

The above-described embodiments have the following effects.

Any one of predetermined recognition classes is identified from input data using a trained machine learning model. The correspondence relationship between the recognition class and the predetermined information is analyzed using a database that stores the correspondence relationship between the recognition class and the predetermined information. Thus, in, for example, identifying a cause of a defect in a product using machine learning, it is possible to improve detection accuracy and versatility while suppressing an amount of training data.

Furthermore, it is assumed that the input data is an image and the database stores a correspondence relationship between a recognition class of a defect and an apparatus type or a manufacturing process. Then, the correspondence relationship between the recognition class and the apparatus type or the manufacturing process is analyzed using the database. Thus, in identification of an apparatus or a manufacturing process that has caused a defect in a product, using machine learning, it is possible to improve detection accuracy and versatility while suppressing the amount of training data.

Furthermore, it is assumed that the input data is an image, and the database stores a correspondence relationship between a recognition class of a behavior and a monitoring place. Then, the correspondence relationship between the recognition class of the behavior and the monitoring place is analyzed using the database. Thus, in identification of a monitoring place where a defect in a product has occurred, using machine learning, it is possible to improve detection accuracy and versatility while suppressing the amount of training data.

Furthermore, it is assumed that the input data is an image and the database stores a correspondence relationship between a recognition class of a behavior and a detection result of applicability to a detection target behavior. Then, the correspondence relationship between the recognition class and the applicability to the detection target behavior is analyzed using the database. Thus, in the detection of an abnormal behavior using machine learning, it is possible to improve detection accuracy and versatility while suppressing the amount of training data.

Furthermore, the machine learning model is set as a neural network. Then, the input data is input to the neural network, and the input data is converted into any one of the recognition classes and the certainty factor of the recognition class. Thus, in, for example, identifying the cause of the defect in the product using machine learning, the detection accuracy and versatility can be more simply improved while suppressing the amount of training data.

Furthermore, the database used for analysis is switched or limited to a part of the database in accordance with the information on the product included in the image or the information on the place where the person is present included in the image. Thus, it is possible to improve detection accuracy in, for example, identifying a cause of a defect in a product using machine learning.

Furthermore, when the certainty factor of the converted recognition class is less than a predetermined threshold value, the analysis is not performed. Thus, it is possible to suppress the occurrence of a false report and a report failure when the conversion of the input data into the recognition class fails.

Furthermore, the certainty factor is weighted in accordance with the degree of importance set for each converted recognition class. Then, the correspondence relationship between the recognition class having the highest certainty factor after weighting and the predetermined information is analyzed using the database. This can further suppress the occurrence of a report failure.

Furthermore, the identification results by the identification section of the respective images of different analysis targets of the same product are accumulated, and the apparatus type is detected through the analysis based on the plurality of accumulated identification results. Thus, it is possible to further improve the detection accuracy in, for example, identifying the cause of the defect in the product using the machine learning.

The description given above on the analysis system, the analysis program, the analysis apparatus, and the analysis method is about main components for describing the features of the above-described embodiments. The analysis system, the analysis program, the analysis apparatus, and the analysis method are not limited to the above-described configurations. The analysis system, the analysis program, the analysis apparatus, and the analysis method can be variously modified within the scope of the claims. In addition, a configuration included in a general abnormality detection system or the like is not excluded.

For example, some of the steps in the flowcharts described above may be omitted, and other steps may be added. Furthermore, some of the steps may be executed at the same time, and one step may be divided into a plurality of steps and executed.

In the embodiment, the conversion section 112 inputs the image 201 to the learned model 121 of the neural network. The case where the image 201 is converted into any one of the predetermined recognition classes by the convolution operation has been described as an example. However, the conversion section 112 compares the image of the non-defective product reproduced from the image including the analysis target 202 using an autoencoder with the image including the analysis target 202. The conversion section 112 may convert the comparison result (difference data) into any one of predetermined recognition classes by inputting the comparison result to the learned model 121 of the neural network.

In addition, the conversion section 112 may estimate a joint point of a person from the image 201 by using an hour glass network, and detect a person's behavior based on the estimated joint point.

When the imaging apparatus 200 is replaced with a microphone, the conversion section 112 converts voice data into a predetermined recognition class. When the imaging apparatus 200 is replaced with an odor sensor, the conversion section 112 converts odor data into a predetermined recognition class. When the imaging apparatus 200 is replaced with a temperature sensor, the conversion section 112 converts temperature data into a predetermined recognition class. In these cases, the predetermined recognition classes can be, for example, a high-pitched (equal to or higher than a certain frequency) abnormal sound, a low-pitched (lower than the certain frequency) abnormal sound, and a burned odor. The predetermined recognition classes may be a chemical odor, a high temperature equal to or higher than a certain threshold value, a low temperature lower than a certain threshold value, and the like.

Furthermore, the means and methods for performing various kinds of processing in the above-described system can be implemented by a dedicated hardware circuit. Alternatively, the means and methods for performing various kinds of processing in the above-described system can also be implemented by a programmed computer. The program may be provided by a computer-readable recording medium such as a universal serial bus (USB) memory or a digital versatile disc (DVD)-ROM, or may be provided online via a network such as the Internet. In this case, the program recorded on the computer-readable recording medium is generally transferred to and stored in a storage section such as a hard disk. Furthermore, the program may be provided as a single piece of application software, or may be incorporated, as a function, into software of an apparatus such as an abnormality detection apparatus.

This application is based on Japanese Patent Application (Japanese Patent Application No. 2021-002033) filed on January 8, 2021, the disclosure of which is incorporated herein by reference in its entirety.

### Reference Signs List

- 10: analysis system
- 100: analysis apparatus
- 110: controller
- 111: acquisition section
- 112: conversion section
- 113: analysis section
- 114: output section
- 120: storage section
- 121: learned model
- 122: knowledge database
- 130: communication section
- 140: operation display section
- 200: imaging apparatus
- 201: image
- 202: analysis target

## Claims

1. An analysis apparatus comprising:
an acquisition section that acquires input data;
an identification section that identifies any one of predetermined recognition classes by inputting the acquired input data to a machine learning model trained in advance with training data;
a database that stores a correspondence relationship between the recognition class and predetermined information;
an analysis section that analyzes the correspondence relationship between the recognition class and the predetermined information by using the database; and
an output section that outputs an analysis result obtained by the analysis section.

2. The analysis apparatus according to claim 1, wherein
the input data is an image,
the database stores a correspondence relationship between the recognition class of a defect and an apparatus type or a manufacturing process, and
the analysis section analyzes the correspondence relationship between the recognition class and the apparatus type or the manufacturing process by using the database.

3. The analysis apparatus according to claim 1, wherein
the input data is an image,
the database stores a correspondence relationship between the recognition class of a behavior and a monitoring place, and
the analysis section analyzes the correspondence relationship between the recognition class of the behavior and the monitoring place by using the database.

4. The analysis apparatus according to claim 1, wherein
the input data is an image,
the database stores a correspondence relationship between the recognition class of a behavior and applicability to a detection target behavior, and
the analysis section analyzes the correspondence relationship between the recognition class and the applicability to the detection target behavior by using the database.

5. The analysis apparatus according to claim 1, wherein
the machine learning model is a neural network, and
the identification section inputs the input data to the neural network and converts the input data into any one of the recognition classes and a certainty factor of the recognition class.

6. The analysis apparatus according to claim 1, wherein
the input data is an image, and
the analysis apparatus further comprises a data control section that switches the database used for analysis by the analysis section or limits the database to a part of the database in accordance with information on a product included in the image or information on a place where a person included in the image is present.

7. The analysis apparatus according to claim 5, wherein the analysis section does not perform analysis when the certainty factor of the recognition class converted by the identification section is less than a predetermined threshold value.

8. The analysis apparatus according to claim 5, wherein the analysis section weights the certainty factor in accordance with a degree of importance set for each of the recognition classes converted by the identification section, and analyzes, using the database, a correspondence relationship between the recognition class having a highest weighted certainty factor and the predetermined information.

9. The analysis apparatus according to claim 2, wherein the analysis section accumulates identification results by the identification section of respective images of different analysis targets of a same product, and detects the apparatus type through analysis based on a plurality of accumulated identification results.

10. An analysis system comprising:
the analysis apparatus according to any one of claims 1 to 9; and
a storage section that stores the machine learning model and the database.

11. An analysis program for causing a computer to execute a process comprising the procedures of:
(a) acquiring input data;
(b) inputting the input data acquired in the procedure (a) to a machine learning model trained in advance with training data to identify any one of predetermined recognition classes;
(c) analyzing a correspondence relationship between the recognition class and predetermined information by using a database storing the correspondence relationship between the recognition class and the predetermined information; and
(d) outputting an analysis result obtained in the procedure (c).

12. The analysis program according to claim 11, wherein
the input data is an image,
the database stores a correspondence relationship between the recognition class of a defect and an apparatus type or a manufacturing process, and
the procedure (c) includes analyzing the correspondence relationship between the recognition class and the apparatus type or the manufacturing process by using the database.

13. The analysis program according to claim 11, wherein
the input data is an image,
the database stores a correspondence relationship between the recognition class of a behavior and a monitoring place, and
the procedure (c) includes analyzing the correspondence relationship between the recognition class of the behavior and the monitoring place by using the database.

14. The analysis program according to claim 11, wherein
the input data is an image,
the database stores a correspondence relationship between the recognition class of a behavior and applicability to a detection target behavior, and
the procedure (c) includes analyzing the correspondence relationship between the recognition class and the applicability to the detection target behavior by using the database.

15. The analysis program according to claim 11, wherein
the machine learning model is a neural network, and
the procedure (b) includes inputting the input data to the neural network, and converting the input data into any one of the recognition classes and a certainty factor of the recognition class.

16. The analysis program according to claim 11, wherein
the input data is an image, and
the process further comprises a procedure (d) of switching the database used for analysis in the procedure (c) or limiting the database to a part of the database in accordance with information on a product included in the image or information on a place where a person included in the image is present.

17. The analysis program according to claim 15, wherein the procedure (c) includes not performing analysis when the certainty factor of the recognition class converted in the procedure (b) is less than a predetermined threshold value.

18. The analysis program according to claim 15, wherein the procedure (c) includes weighting the certainty factor in accordance with a degree of importance set for each of the recognition classes converted in the procedure (b), and analyzing a correspondence relationship between the recognition class having a highest weighted certainty factor and the predetermined information by using the database.

19. The analysis program according to claim 12, wherein the procedure (c) includes accumulating identification results in the procedure (b) of respective images of different analysis targets of a same product, and detecting the apparatus type through analysis based on a plurality of accumulated identification results.

20. An analysis method comprising the steps of:
(a) acquiring input data;
(b) inputting the input data acquired in the step (a) to a machine learning model trained in advance with training data to identify any one of predetermined recognition classes;
(c) analyzing a correspondence relationship between the recognition class and predetermined information by using a database storing the correspondence relationship between the recognition class and the predetermined information; and
(d) outputting an analysis result obtained in the step (c).
